# EUROPEAN PATENT APPLICATION

(11) **EP 4 057 657 A1**
(43) Date of publication of application: **14.09.2022**
(21) Application number: 20885462.0
(22) Date of filing: 02.11.2020
(51) Int. Cl.: H04W 8/18, H04W 8/08, H04W 60/00, H04W 88/18

(54) **NETWORK CONTROL METHOD FOR TRANSMITTING UE POLICY**

(30) Priority: 08.11.2019 KR 20190142534
(71) Applicant: LG Electronics Inc., SEOUL 07336 (KR)
(72) Inventor: KIM, Hyunsook, Seoul 06772 (KR); YOUN, Myungjune, Seoul 06772 (KR)
(74) Representative: Maikowski & Ninnemann Patentanwälte Partnerschaft mbB
(86) International application number: PCT/KR2020/015171
(87) International publication number: WO 2021/091186

(57) **Abstract**

Provided in one disclosure of the present specification is a method for establishing a policy association. The method can comprise the steps in which: a policy control function (PCF) device determines to establish a policy association on the basis of first information; the PCF transmits, to an access and mobility management function (AMF) device, information that indicates the establishment of the policy association; and the PCF receives, from the AMF device, a message that requests the policy association establishment.

## Description

### TECHNICAL FIELD

The present specification relates to mobile communications.

### BACKGROUND

With the success of long-term evolution (LTE)/LTE-Advanced (LTE-A) for the fourth-generation mobile communication, the next generation mobile communication, which is the fifth-generation (so called 5G) mobile communication, has been attracting attentions and more and more researches are being conducted.

The fifth-generation communication defined by the international telecommunication union (ITU) refers to providing a maximum data transmission speed of 20Gbps and a maximum transmission speed of 100Mbps per user in anywhere. It is officially called "IMT-2020" and aims to be released around the world in 2020.

5G mobile communication supports multiple numerology or subcarrier spacing (SCS) to support various services. For example, when SCS is 15kHz, it supports a wide area in traditional cellular bands, and when SCS is 30kHz/60kHz, dense-urban, lower latency and wider carrier bandwidth, and when SCS is 60 kHz or higher, a bandwidth greater than 24.25 GHz to overcome phase noise.

In order for the UE to communicate, the UE should register in the network. During the registration procedure, the UE may transmit a UE policy container to the network in relation to the UE policy. Afterwards, the UE policy container is needed in the process of the Core Access and Mobility Management Function (AMF) device performing the AM Policy Association Establishment procedure. However, if the UE does not transmit the UE policy container to the network during the registration procedure, a problem may occur.

### SUMMARY

Therefore, the disclosure of the present specification is to propose method for solving the above-mentioned problems.

For solving the above-mentioned problems, a disclosure of the present specification is to propose a method for establishment of Policy Association, comprising: determining to establish a policy association, by a PCF (Policy Control Function), based on a first information; transmitting, by the PCF to an AMF (Access and Mobility Management Function), information on indicating policy association establishment; receiving, by the PCF from the AMF, policy association establishment request message.

Therefore, the disclosure of the present specification is to propose method for solving the above-mentioned problems.

### BRIEF DESCRIPTION OF THE DRAWINGS

FIG. 1 is a structural diagram of a next-generation mobile communication network.
FIG. 2 is an exemplary diagram illustrating an expected structure of next-generation mobile communication from the viewpoint of a node.
FIG. 3 is an exemplary diagram illustrating an architecture for supporting simultaneous access to two data networks.
FIG. 4 is another exemplary diagram showing the structure of a radio interface protocol (Radio Interface Protocol) between the UE and the gNB.
FIG. 5a, 5b and 5c are signal flow diagrams illustrating an exemplary registration procedure.
FIG. 6 shows a first example AM Policy Association Establishment procedure according to the first disclosure of the present specification.
FIG. 7 shows a second example AM Policy Association Establishment procedure according to the first disclosure of the present specification.
FIG. 8 shows a third example AM Policy Association Establishment procedure according to the first disclosure of the present specification.
FIG. 9 shows an exemplary AM Policy Association Establishment procedure according to the second disclosure of the present specification.
FIG. 10 shows an exemplary UE Configuration Update procedure according to the second disclosure of the present specification.
FIG. 11 shows an AM Policy Association Establishment procedure for an example according to the third disclosure of the present specification.
FIG. 12 shows a block diagram of a processor in which the disclosure of the present specification is implemented.
FIG. 13 shows an apparatus according to an embodiment.
FIG. 14 illustrates a block diagram of a network node according to an embodiment.
FIG. 15 is a block diagram illustrating the configuration of the UE 100 according to an embodiment.
FIG. 16 is a detailed block diagram illustrating the transceiver of the first device shown in FIG. 13 or the transceiver of the device shown in FIG. 15 in detail.
FIG. 17 illustrates a communication system 1 applied to the disclosure of the present specification.

### DETAILED DESCRIPTION

The technical terms used herein are used to merely describe specific embodiments and should not be construed as limiting the present specification. Further, the technical terms used herein should be, unless defined otherwise, interpreted as having meanings generally understood by those skilled in the art but not too broadly or too narrowly. Further, the technical terms used herein, which are determined not to exactly represent the spirit of the specification, should be replaced by or understood by such technical terms as being able to be exactly understood by those skilled in the art. Further, the general terms used herein should be interpreted in the context as defined in the dictionary, but not in an excessively narrowed manner.

The expression of the singular number in the present specification includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present specification, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present specification.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present specification will be described in greater detail with reference to the accompanying drawings. In describing the present specification, for ease of understanding, the same reference numerals are used to denote the same components throughout the drawings, and repetitive description on the same components will be omitted. Detailed description on well-known arts which are determined to make the gist of the specification unclear will be omitted. The accompanying drawings are provided to merely make the spirit of the specification readily understood, but not should be intended to be limiting of the specification. It should be understood that the spirit of the specification may be expanded to its modifications, replacements or equivalents in addition to what is shown in the drawings.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C"

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are individually described in one drawing in this specification may be implemented individually or simultaneously.

In the appended drawings, although a User Equipment (UE) is illustrated as an example, this is merely an example given to simplify the description of the present disclosure. Herein, a UE may mean to a wireless communication device performing communication in a communication system, such as EPS and/or 5GS, and so on. And, the UE shown in the drawing may also be referred to as a terminal, a mobile equipment (ME), a wireless communication device, a wireless communication apparatus, and so on. Additionally, the UE may be a portable device, such as a laptop computer, a mobile phone, a PDA, a smart phone, a multimedia device, and so on, or the UE may be a non-portable device, such as a personal computer (PC) or a vehicle mounted device.

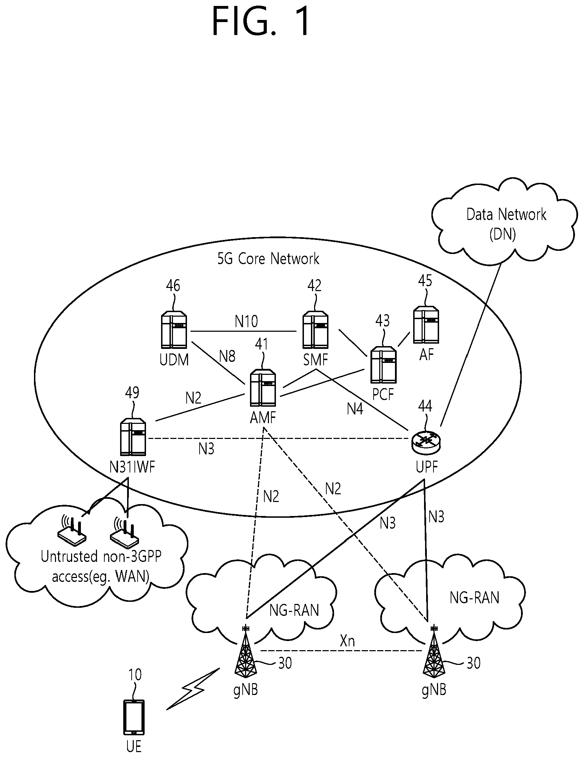

**FIG. 1** **is a structural diagram of a next-generation mobile communication network.**

5GC (5G Core) may include various components, and in FIG. 1, AMF (Access and Mobility Management Function) 41, SMF (Session Management Function) 42, and PCF (Policy Control) corresponding to some of them Function) 43, UPF (User Plane Function) 44, AF (Application Function) 45, UDM (Unified Data Management) 46, and N3IWF (Non-3GPP InterWorking Function) 49.

The UE 10 is connected to a data network through the UPF 440 through a Next Generation Radio Access Network (NG-RAN).

The UE 10 may receive a data service through untrusted non-3rd Generation Partnership Project (non-3GPP) access, for example, a wireless local area network (WLAN). To connect the non-3GPP access to the core network, an N3IWF 49 may be deployed.

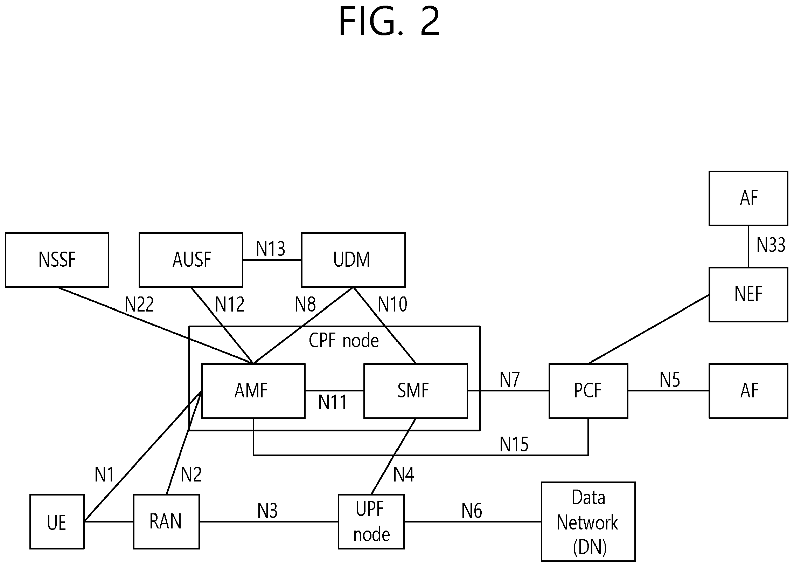

**FIG. 2** **is an exemplary diagram illustrating an expected structure of next-generation mobile communication from the viewpoint of a node.**

As can be seen with reference to FIG. 2, the UE is connected to a data network (DN) through a next-generation RAN (Radio Access Network).

The illustrated control plane function (CPF) node performs all or part of the functions of the MME (Mobility Management Entity) of the 4th generation mobile communication, and all or part of the control plane functions of a Serving Gateway (S-GW) and a PDN Gateway (P-GW). The CPF node includes an Access and Mobility Management Function (AMF) and a Session Management Function (SMF).

The illustrated User Plane Function (UPF) node is a type of gateway through which user data is transmitted and received. The UPF node may perform all or part of the user plane functions of the S-GW and P-GW of 4G mobile communication.

The illustrated PCF (Policy Control Function) is a node that controls the operator's policy.

The illustrated application function (Application Function: AF) is a server for providing various services to the UE.

The illustrated unified data management (UDM) is a kind of server that manages subscriber information, like a home subscriber server (HSS) of 4G mobile communication. The UDM stores and manages the subscriber information in a Unified Data Repository (UDR).

The illustrated Authentication Server Function (AUSF) authenticates and manages the UE.

The illustrated network slice selection function (NSSF) is a node for network slicing as will be described later.

In FIG. 2, a UE may simultaneously access two data networks using multiple PDU (protocol data unit or packet data unit) sessions.

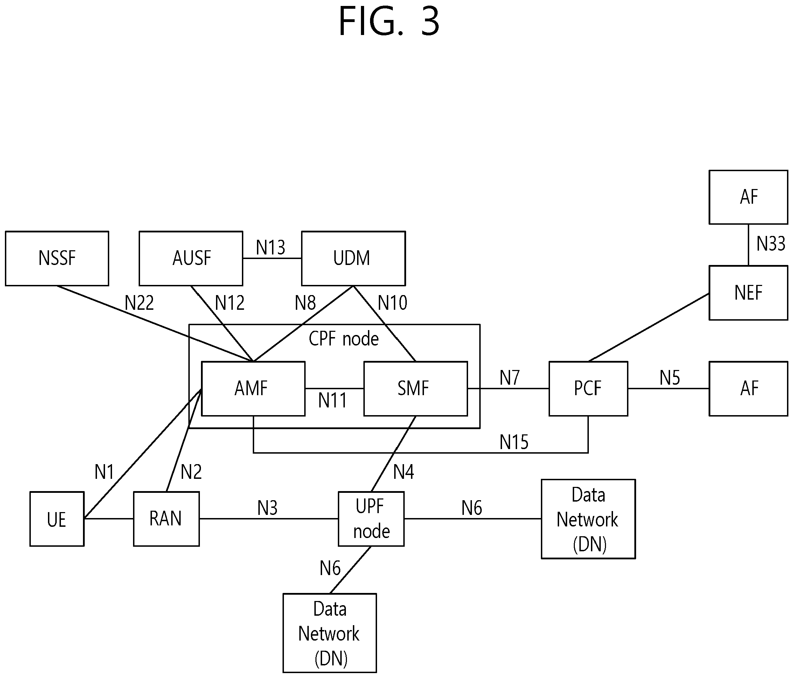

**FIG. 3** **is an exemplary diagram illustrating an architecture for supporting simultaneous access to two data networks.**

FIG. 3 shows an architecture for a UE to simultaneously access two data networks using one PDU session.

Reference points shown in FIGS. 2 and 3 are as follows.
N1 represents a reference point between the UE and the AMF
N2 represents a reference point between (R)AN and AMF
N3 represents the reference point between (R)AN and UPF.
N4 represents a reference point between SMF and UPF.
N5 represents the reference point between PCF and AF.
N6 represents a reference point between UPF and DN.
N7 represents a reference point between SMF and PCF.
N8 represents a reference point between UDM and AMF
N9 represents a reference point between UPFs.
N10 represents a reference point between the UDM and the SMF.
N11 represents a reference point between AMF and SMF.
N12 represents a reference point between AMF and AUSF.
N13 represents a reference point between UDM and AUSF.
N14 represents a reference point between AMFs.
N15 represents a reference point between PCF and AMF.
N16 represents a reference point between SMFs.
N22 represents a reference point between the AMF and the NSSF.

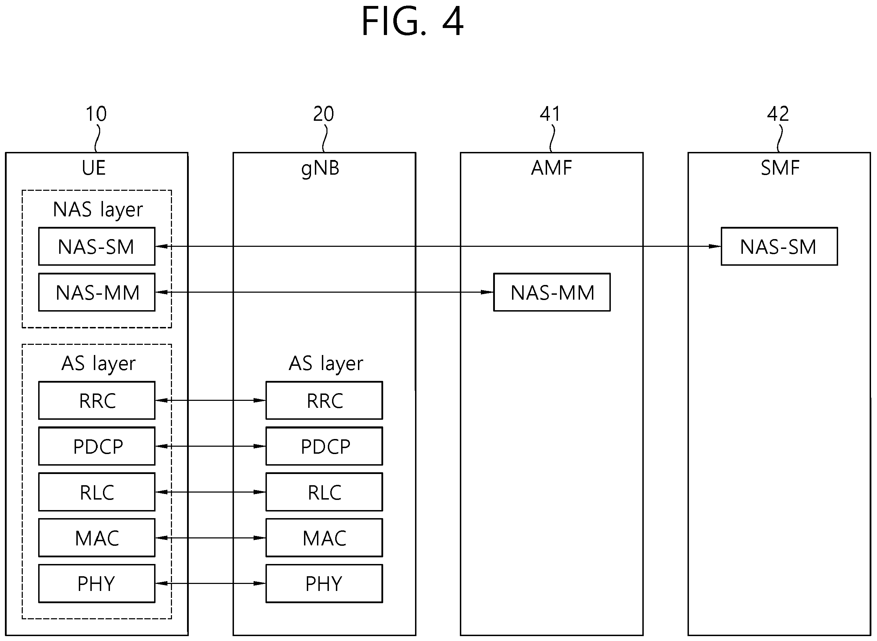

FIG. 4 is another exemplary diagram showing the structure of a radio interface protocol (Radio Interface Protocol) between the UE and the gNB.

The radio interface protocol is based on the 3GPP radio access network standard. The air interface protocol is horizontally composed of a physical layer, a data link layer, and a network layer, and vertically a user plane for data information transmission and control. It is divided into a control plane for signal transmission.

The protocol layers can be distinguished to L1 (first layer), L2 (second layer), and L3 (third layer) based on the lower three layers of the open system interconnection (OSI) reference model widely known in communication systems.

Hereinafter, each layer of the radio protocol will be described.

The first layer, the physical layer, provides an information transfer service using a physical channel. The physical layer is connected to an upper medium access control layer through a transport channel, and data between the medium access control layer and the physical layer is transmitted through the transport channel. And, data is transferred between different physical layers, that is, between the physical layers of the transmitting side and the receiving side through a physical channel.

The second layer includes a Medium Access Control (MAC) layer, a Radio Link Control (RLC) layer, and a Packet Data Convergence Protocol (PDCP) layer.

The third layer includes radio resource control (hereinafter abbreviated as RRC). The RRC layer is defined only in the control plane and is responsible to control logical channels, transport channels and physical channels related to the establishment (establishment), re-establishment (Re-establishment) and release (Release) of radio bearers (Radio Bearer; abbreviated as RB). In this case, the RB means a service provided by the second layer for data transfer between the UE and the E-UTRAN.

The NAS (Non-Access Stratum) layer performs functions such as connection management (session management) and mobility management (Mobility Management).

The NAS layer is divided into a NAS entity for MM (Mobility Management) and a NAS entity for SM (session management).
1) The NAS entity for MM provides the following general functions.

NAS procedures related to AMF, including the following.
- Registration management and access management procedures. AMF supports the following functions.
- Secure NAS signal connection between UE and AMF (integrity protection, encryption)

2) The NAS entity for SM performs session management between the UE and the SMF.

SM signaling messages are processed, i.e., generated and processed in the NAS-SM layer of the UE and SMF. The content of the SM signaling message is not interpreted by the AMF.
- In case of SM signaling transmission,
- The NAS entity for MM creates a NAS-MM message that derives how and where to forward the SM signaling message with a security header indicating the NAS transmission of the SM signaling, additional information about the receiving NAS-MM
- Upon reception of SM signaling, the NAS entity for SM performs an integrity check of the NAS-MM message, and interprets additional information to derive a method and a place to derive the SM signaling message.

Meanwhile, in FIG. 4, the RRC layer, the RLC layer, the MAC layer, and the PHY layer located below the NAS layer are collectively referred to as an access layer (Access Stratum: AS).

A network system (i.e., 5GC) for next-generation mobile communication (i.e., 5G) also supports non-3GPP access. An example of the non-3GPP access is typically a WLAN access. The WLAN access may include both a trusted WLAN and an untrusted WLAN.

In the system for 5G, AMF performs registration management (RM: Registration Management) and connection management (CM: Connection Management) for 3GPP access as well as non-3GPP access.

### <Registration Procedure>

The UE needs to obtain an authorization to enable mobility tracking, to enable data reception, and to receive services. For this, the UE must register with the network. The registration procedure is performed when the UE needs to do initial registration with the 5G system. In addition, the registration procedure is performed when the UE performs periodic registration update, when moving from an idle mode to a new tracking area (TA), and when the UE needs to perform periodic registration update.

During the initial registration procedure, the ID of the UE may be obtained from the UE. AMF can pass PEI (IMEISV) to UDM, SMF and PCF.

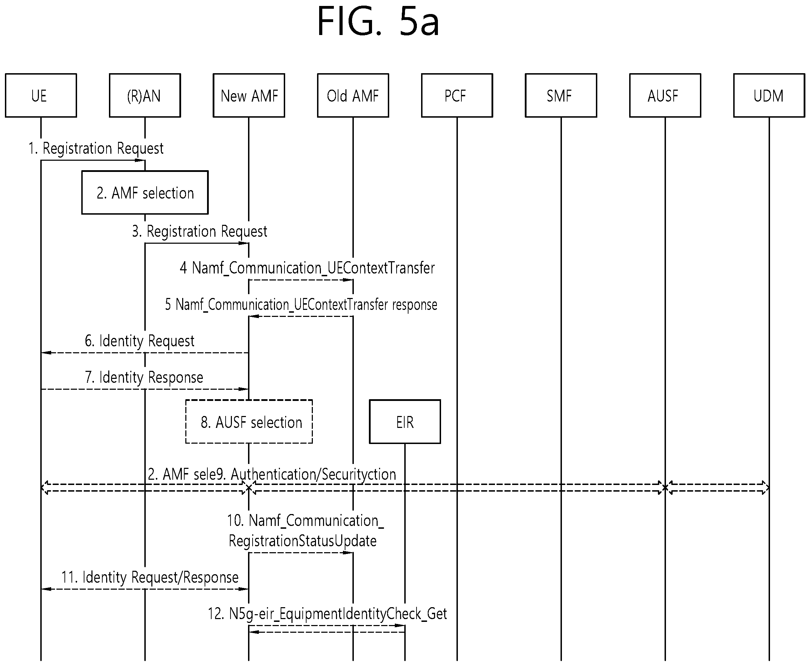

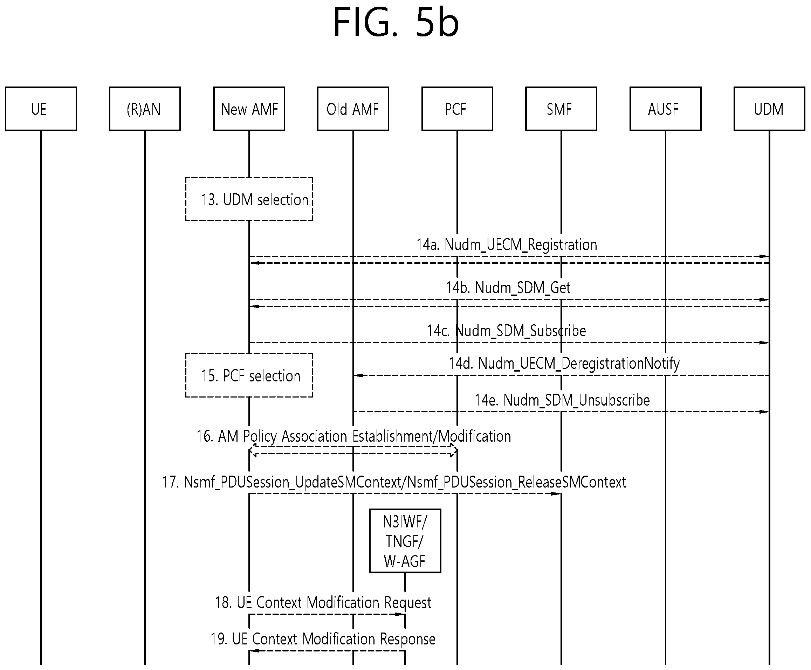

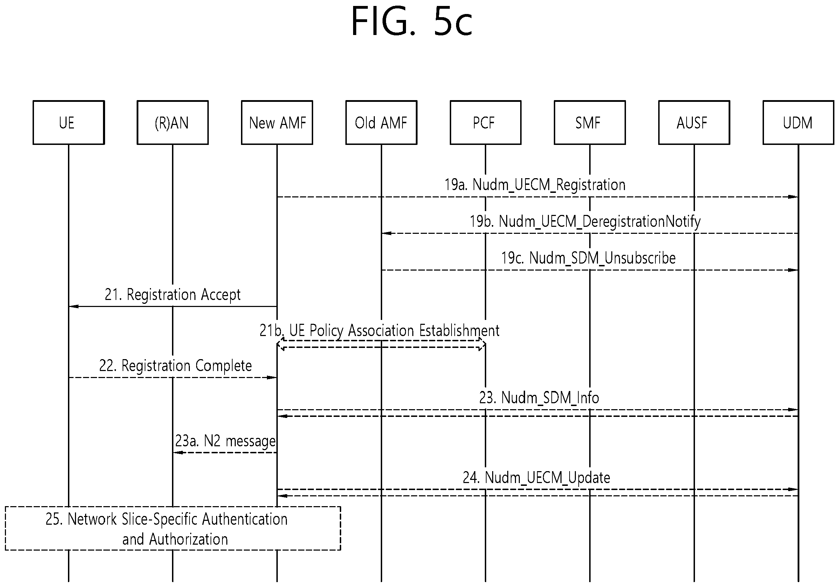

**FIG. 5a****,** **5b** **and** **5c** **are signal flow diagrams illustrating an exemplary registration procedure.**
1) The UE may send an AN message to the RAN. The AN message may include an AN parameter and a registration request message. The registration request message may include a registration type, 5G NR Global Unique Temporary Identifier (5G-GUTI), security parameters, Network Slice Selection Assistance Information (NSSAI), 5G capability of the UE, Protocol Data Unit (PDU) session state, a list of PDU session to be activated, a requested DRX parameter, and a UE policy container. The UE policy container may include a list of Public Service IDs (PSIs) and so on.

In the case of 5G RAN, the AN parameters may include a selected public land mobile network (PLMN) ID and a requested NSSAI.

The registration type may indicate whether "initial registration" (i.e. the UE is in a non-registered state), "Mobility registration update" (i.e. the UE is in the registered state and starts the registration procedure due to mobility), "Regular registration update" (That is, the UE is in the registered state and starts the registration procedure due to the expiration of the periodic update timer) or "emergency registration (ie, the UE is in a restricted situation). In case UE performs initial registration, the UE may include the ID of the UE in the registration request message and transmit it to the RAM

Security parameters may be used for authentication and integrity protection.

2) The PDU session state may indicate an available (previously configured) PDU session in the UE.

If the (R)AN cannot select an appropriate AMF, it forwards the registration request to any AMF that can perform AMF selection.

3) The RAN transmits an N2 message to the new AMF. The N2 message includes an N2 parameter, a registration request, and a UE policy container.

When 5G-RAN is used, the N2 parameter is a UE context request indicating that the UE context including the selected PLMN ID, location information and cell identifier related to the cell on which the UE is camping, and security information needs to be installed in the 5G-RAN.

If the registration type indicated by the UE is periodic registration update, steps 4 to 19 to be described later may not be performed.

4) The new AMF may request information to the old AMF or UDSF (Unstructured Data Storage Function).

(If UDSF is used) If the 5G-GUTI of the UE is included in the registration request and the serving AMF has changed since the last registration, the new AMF and the old AMF are in the same AMF set and the UDSF is used. The new AMF may retrieve the stored UE's SUPI and UE context directly from the UDSF.

(If UDSF is not used) If the UE's 5G-GUTI is included in the registration request and the serving AMF has changed since the last registration, the new AMF may sends a message to the old AMF to request the UE's SUPI and UE context. At this time, the old AMF may use 5G-GUTI or SUPI to prove integrity protection. The old AMF may also send event subscription information by each NF consumer to the new AMF

If the old AMF has PDU Sessions for another access type (different from the Access Type indicated in this step) and if the old AMF determines that there is no possibility for relocating the N2 interface to the new AMF, the old AMF returns UE's SUPI

The new AMF may set the indication that the UE is validated according to step 9a, if the new AMF has performed successful UE authentication after previous integrity check failure in the old AMF.

The NF consumers does not need to subscribe for the events once again with the new AMF after the UE is successfully registered with the new AMF.

If the new AMF has already received UE contexts from the old AMF during handover procedure, then step 4, 5 and 10 may be skipped.

For an Emergency Registration, if the UE identifies itself with a 5G-GUTI that is not known to the AMF, steps 4 and 5 are skipped and the AMF immediately requests the SUPI from the UE. If the UE identifies itself with PEI, the SUPI request may be skipped. Allowing Emergency Registration without a user identity is dependent on local regulations.

5) The old AMF transmits an information response message to the newly selected AMF. The information response message may include SUPI, UE context, and SMF information. The old AMF may start an implementation specific (guard) timer for the UE context. Also, the UDSF sends a response message to the new AMF

If the UDSF was queried in step 4, the UDSF may respond to the new AMF with the related contexts including established PDU Sessions. If there was a request from the old AM in step 4, the old AMF may respond with the new AMF to the request with the UE's SUPI and UE context.

When the old AMF has information on the active PDU session, the old AMF may include PDU session ID, DNN, S-NSSAI, and SMF information in the information response message.

If the old AMF fails the integrity check of the Registration Request NAS message, the old AMF may indicate an integrity check failure.

When the old AMF has information of AM Policy Association and UE Policy Association, the old AMF may include AM Policy Association, UE Policy Association, and PCF ID. In case of roaming, V-PCF ID and H-PCF ID may be included.

6) If the SUCI is not provided by the UE or is not retrieved from the old AMF, the new AMF sends an Identity Request message to the UE.

7) The UE transmits an identity response message including the SUCI to the new AMF. The UE may derive the SUCI using the supplied public key of the HPLMN

8) AMF may decide to trigger AUSF. In this case, the AMF may select the AUSF based on SUPI or SUCI.

9a) If authentication is required, AMF requests authentication from AUSF. If the AMF can use a tracing request for the UE (Tracing Requirement), the AMF may provide a tracing request for the AUSF. Upon the request of the AMF, the AUSF may execute authentication of the UE. Authentication is performed and AUSF may select UDM and get authentication data from UDM.

9b) If the NAS security context does not exist, NAS security initiation may be performed. If the UE does not have a NAS security context in step 1, the UE includes a full Registration Request message.

The AMF may decide whether the initial AMF should reroute the registration request to the AMF.

9c) If the 5G-AN requested the UE context, the AMF initiates the NGAP procedure to provide the security context to the 5G-AN. In addition, In case the UE MM Core Network Capability, including the indication that AMF does not support N26 for EPS interworking, and that AMF supports the request type flag "Handover" for PDN connection requests during the connection procedure, is received, the AMF may provide a "Redirection for EPS fallback" indication to the 5G-AN. In addition, if the AMF can use the tracking requirements for the UE, the AMF may provide the tracking requirements to the 5G-AN in the NGAP procedure.

9d) 5G-AN may store the security context and inform the AMF. 5G-AN may use the security context to protect messages exchanged with the UE.

10) The new AMF may transmit an information response message to the old AMF

If the AMF is changed, the new AMF may notify the previous AMF that UE registration in the new AMF has been completed.

If the authentication/security procedure fails, registration is rejected and the new AMF may send a rejection message to the old AMF

If new AMF received in the UE context transfer in step 2 the information about the AM Policy Association and the UE Policy Association and decides, based on local policies, not to use the PCF(s) identified by the PCF ID(s) for the AM Policy Association and the UE Policy Association, then it will inform the old AMF that the AM Policy Association and the UE Policy Association in the UE context is not used any longer and then the PCF selection is performed in step 15.

11) The new AMF may transmit an identity request/response message to the UE.

If the PEI was not provided by the UE or was not retrieved from the previous AMF, an Identity Request message may be sent to the UE for the AMF to retrieve the PEI.

For emergency registration, the UE may have included the PEI in the registration request. If so, the PEI search may be skipped.

12) The new AMF checks the ME identity.

13) If step 14 to be described later is performed, the new AMF selects a UDM based on SUPI. And UDM selects UDR.

14a-c) If the AMF has changed since the last registration procedure, or if the UE provides a SUPI which doesn't refer to a valid context in the AMF, the new AMF may register with the UDM using Nudm_UECM_Registration to register access.

At this step, the AMF may not have all the information necessary to determine the establishment of the IMS Voice over PS session support indication for the UE. Therefore, the AMF may send "Homogenous Support of IMS Voice over PS Sessions" later in this procedure.

If AMF does not have subscription data for the UE, AMF may use Nudm_SDM_Get to retrieve access and mobility subscription data, SMF selection subscription data and UE context from SMF data. For this, the UDM must be able to retrieve this information from the UDR by Nudr DM Query. After receiving a successful response, AMF subscribes to be notified using Nudm_SDM_Subscribe when requested data is modified, and UDM may subscribe to UDR via Nudr_DM_Subscribe. If GPSI is available in UE subscription data, GPSI is provided to AMF in access and mobility subscription data of UDM. UDM may provide an indication that subscription data for network slicing is updated for the UE. "MPS priority" is included in the access and mobility subscription data provided to the AMF when the UE is subscribed to MPS in the serving PLMN When the UE subscribes to the MCX in the serving PLMN, "MCX priority" is included in the access and mobility subscription data provided to the AMF.

The new AMF provides the access type that the UE provides to the UDM, and the access type is set to "3GPP access". UDM stores the associated access type with the provisioning AMF and does not remove the AMF ID associated with another access type, if any. UDM may be stored in UDR information provided during AMF registration by Nudr_DM_Update.

If the UE is registered with the old AMF for access and the old AMF and the new AMF are in the same PLMN, after the old AMF relocation is successfully completed, the new AMF sends a separate/independent Nudm_UECM_Registration to access the access established by the old AMF Update UDM with type.

The new AMF creates the UE context for the UE after getting the access and mobility subscription data from the UDM. Access and Mobility Subscription data includes whether the UE can include the NSSAI in plaintext in the 3GPP access RRC connection establishment.

In case of emergency registration where the UE is not successfully authenticated, the AMF MUST NOT register with the UDM.

In case of emergency registration, AMF may not check access restrictions, geo restrictions or subscription restrictions. In case of emergency registration, the AMF ignores the unsuccessful registration response of the UDM and continues the registration procedure.

14d) When the UDM has stored the associated access type with the service AMF as described in step 14a, the UDM initiates a Nudm_UECM_DeregistrationNotification for the previous AMF corresponding to the same access. If the timer started in step 5 is not running, the old AMF may remove the UE context. Alternatively, the AMF may remove the UE context when the timer expires. If the reason for removing the serving NF indicated by the UDM is initial registration, the previous AMF calls the Nsmf_PDUSession_ReleaseSMContext (SUPI, PDU Session ID) service operation for all related SMFs of the UE to inform that the UE has previously been deregistered. AMF. The SMF(s) shall release the PDU session upon receipt of this notification.

If the old AMF establishes an AM policy connection and UE policy connection with the PCF, and the old AMF does not send the PCF ID to the new AMF, the old AMF performs the policy connection initiated by the AMF. After performing the termination procedure and the existing AMF transmitted the PCF IDs of the UE context, the new AMF sends AM policy association information and UE policy association information in step 10. The UE context will not be used. If it is informed, the previous AMF performs the AMF-initiated policy connection termination procedure and performs the AMF-initiated UE policy connection termination procedure.

If the old AMF has an N2 connection to that UE (for example, the UE was in RRC inactive state but has now moved to E-UTRAN or has moved to an area not served by the previous AMF), the old AMF is -AN release must be performed with a cause value indicating that the RRC connection of the RAN has been released.

14e) If the old AMF does not have a UE context for another access type (ie, non-3GPP access), the old AMF may use Nudm_SDM_unsubscribe to unsubscribe the UDM for subscription data.

15) When AMF starts PCF communication, AMF operates as follows.

If the new AMF decides in step 5 to use the (V-)PCF ID identified by the (V-)PCF ID contained in the UE context in the existing AMF in step 5, the AMF V-) Contact with PCF. AMF may decide to perform PCF search and selection and AMF may select (V)-PCF and select H-PCF.

16) The new AMF may perform AM policy connection setup/modification. For urgent registration, this step may be skipped.

If the new AMF selects the new (V-)PCF in step 15, the new AMF may perform AM policy connection establishment with the selected (V-)PCF.

In the existing AMF, if (V-) PCF identified by (V-) PCF ID included in the UE context is used, the new AMF may perform (V-) PCF and AM Policy Association Modification..

If the AMF notifies the PCF of mobility restrictions for coordination, or if the PCF updates its mobility restrictions itself due to some conditions (e.g. the application being used, time and date), the PCF may provide updated Mobility Restrictions to AMF. If the subscription information includes Tracing Requirements, the AMF may provide the Tracing Requirements to the PCF.

17) The new AMF may transmit an Nsmf_PDUSession_UpdateSMContext message to the SMF.

If Registration Type is Mobility Registration Update, this step may be applied for an emergency registered UE.

AMF calls Nsmf_PDUSession_UpdateSMContext in the following scenarios:
- If the list of PDU sessions to be activated is included in the registration request in step 1, the AMF may send an Nsmf_PDUSession_UpdateSMContext request to the SMFs related to the PDU sessions to activate the user plane connection of these PDU sessions. Steps after step 5 may be executed to complete user plane connection activation without sending RRC deactivation support information and without sending MM NAS service acceptance from AMF to (R)AN.

When the serving AMF is changed, the new serving AMF informs the SMF for each PDU session that it has taken over the responsibility of the signaling path to the UE. The new serving AMF may call the Nsmf_PDUSession_UpdateSMContext service operation using the SMF information received from the old AMF. In step 5, it may also indicate whether to re-enable the PDU session.

Steps after step 5 are executed. If an intermediate UPF insertion, removal or change is performed for a PDU session that is not included in the "PDU session to be reactivated", the procedure to update the N3 user plane between (R)AN and 5GC is performed without N11 and N2 interaction.

AMF calls the Nsmf_PDUSession_ReleaseSMContext service action for SMF in the following scenario:

When the PDU session state indicates a change in the network slice set for the UE that is released from the UE or the network slice instance is no longer available, the AMF calls the Nsmf_PDUSession_ReleaseSMContext service operation towards the SMF for this purpose. Release all network resources related to the PDU session.

If the serving AMF is changed, the new AMF must wait until step 18 is completed with all SMFs related to the UE. Otherwise, steps 19-22 may be continued in parallel with this step.

18) If the new AMF and the old AMF/N3IWF are in the same PLMN, the new AMF may send an N2 AMF Mobility Request message to the N3IWF.

If the AMF changes and the old AMF indicates that the UE is in the CM-CONNECTED state via N3IWF, and the new AMF and the old AMF/N3IWF are in the same PLMN, the new AMF creates an NGAP UE connection to the N3IWF to which the UE is connected.. The existing NGAP UE connection between the old AMF and the N3IWF is then automatically disconnected.

19) The N3IWF may transmit an N2 AMF Mobility Response message to the new AMF

19a) When the new AMF receives a response message from the N3IWF in step 19, the new AMF may use Nudm_UECM_Registration as in step 14c to register with the UDM with an access type of "non-3GPP access". A UDM may store associated access types with the serving AMF and not remove the AMF IDs associated with other access types. UDM may be stored in UDR information provided during AMF registration by Nudr_DM_Update.

19b) When the UDM stores the access type (i.e. non-3GPP) associated with the serving AMF as indicated in step 19a, the UDM may initiate
Nudm_UECM_DeregistrationNotification for the previous AMF corresponding to the same (i.e. non-3GPP) access. The old AMF may remove the UE context for non-3GPP access.

19c) The former AMF may cancel its subscription to the UDM.

21) The new AMF tells the UE to accept registration (5G-GUTI, registration area, mobility restriction, PDU session state, allowed NSSAI, [allowed NSSAI mapping], [configured NSSAI for service PLMN], [configured NSSAI mapping], [Denied S-NSSAIs], periodic registration update timer, LADN information and approved MICO mode, IMS Voice over PS session support indication, emergency service support indicator, approved DRX parameters, network support interworking without N26, access layer connectivity Settings NSSAI inclusion mode, network slicing subscription change indication, operator-defined access category definitions, [list of equivalent PLMNs]) may be sent. The allowed NSSAI for the access type of the UE may be included in the N2 message carrying the Registration Accept message.

The AMF may send a registration accept message to the UE indicating that the registration request has been accepted. 5G-GUTI may be included if AMF allocates a new 5G-GUTI. If the UE is already in the RM-REGISTERED state through another access in the same PLMN, the UE may use the 5G-GUTI received in the registration acceptance in both registrations. If the 5G-GUTI is not included in the registration acceptance, the UE may also use the 5G-GUTI assigned to the existing registration for the new registration. When the AMF allocates a new registration area, it may transmit the registration area to the UE through a registration accept message. If there is no registration area in the registration acknowledgment message, the UE may consider the existing registration area as valid. Mobility restrictions may be included when mobility restrictions are applied to the UE and the registration type is not emergency registration. The AMF may indicate to the UE the PDU session established in the PDU session state. The UE may locally remove all internal resources associated with a PDU session not marked as established in the received PDU session state. When the AMF calls the Nsmf_PDUSession_UpdateSMContext procedure for UP activation of PDU sessions in step 18 and receives a rejection from the SMF, the AMF may indicate to the UE the cause of the PDU session ID and user plane resource not being activated. When the UE connects to two AMFs belonging to different PLMNs through 3GPP access and non-3GPP access, the UE may locally remove all internal resources related to the PDU session of the current PLMN that are not marked as established in the received PDU session state. When the PDU session state information is included in the registration request, the AMF may indicate the PDU session state to the UE.

The accepted NSSAI provided in the registration acceptance is valid in the registration area and applies to all PLMNs whose registration area includes a tracking area. The mapping of allowed NSSAI is to map each S-NSSAI of allowed NSSAI to HPLMN S-NSSAI. The mapping of the configured NSSAI is to map each S-NSSAI of the configured NSSAI for the service PLMN to the HPLMN S-NSSAI.

The AMF shall include the LADN information for the LADN list in the registration accept message, which is available within the registration area determined by the AMF for the UE. If the UE includes the MICO mode in the request, the AMF responds whether to use the MICO mode. The AMF may include operator-defined access category definitions so that the UE can determine the applicable operator-specific access category definitions.

For registration via 3GPP access, the AMF may set the IMS Voice over PS session support indication. In order to establish the IMS Voice over PS session support indication, the AMF may need to check the compatibility of the UE and NG-RAN radio functions related to IMS Voice over PS by performing a UE Capability Match Request procedure. If the AMF does not receive the voice assistance match indicator from the NG-RAN in time, depending on the implementation, the AMF may establish an IMS voice supporting the PS session assistance indication and update it later.

For registration over non-3GPP access, the AMF may establish an IMS Voice over PS session support indication.

Emergency Service Support indicator informs the UE that emergency services are supported. That is, the UE may request a PDU session for an emergency service. When the AMF receives "MPS priority" as part of the Access and Mobility Subscription data from the UDM, according to the operator policy, "MPS priority" is included in the Registration Accept message for the UE to access ID 1 informs the UE of the configuration of Valid within the selected PLMN. When AMF receives "MCX priority" as part of Access and Mobility Subscription data from UDM, "MCX priority" is included in registration acknowledgment message for UE based on operator policy and UE subscription to MCX Services and informs the UE. The configuration of access ID 2 is valid within the selected PLMN. N26 sets no parameters.

A network slice subscription change indicator may be included when the UDM intends to inform the UE that the subscription has changed. If the AMF includes a Network Slicing Subscription Change Indication, the UE should locally delete all network slicing configurations for all PLMNs and, if applicable, updates the configuration for the current PLMN based on the received information.

The access layer connection setup NSSAI inclusion mode may be included to instruct the UE to include the NSSAI to include in the access layer connection setup. AMF may set values to operation modes a, b, c only when indicating that NSSAI inclusion is allowed in RRC Connection Establishment Allowed.

21b) The new AMF may perform UE policy association setting. For urgent registration, this step may be skipped.

The new AMF may send an Npcf UEPolicyControl Create Request to the PCF. The PCF may send an Npcf UEPolicyControl Create Response to the new AMF

22) The UE may send a registration complete message to the new AMF

After receiving one of [Configuration NSSAI for Serving PLMN], [Configured NSSAI Mapping], and Network Slicing Subscription Change indication in step 21, the UE may send a registration complete message to the AMF if it is updated successfully.

The UE may send a registration complete message to the AMF to confirm that a new 5G-GUTI has been allocated.

When a new 5G-GUTI is assigned, when the lower layer (3GPP access or non-3GPP access) indicates to the RM layer of the UE that the registration complete message has been successfully transmitted over the air interface, the UE assigns the new 5G-GUTI of 3GPP access It can be passed down to the lower layer.

If the list of PDU sessions to be activated is not included in the registration request and the registration procedure is not started in the CM-CONNECTED state, the AMF releases the signaling connection with the UE.

If the registration request contains a subsequent request, the AMF shall not release the signaling connection after completion of the registration procedure.

If the AMF knows that some signaling is pending in the AMF or between the UE and 5GC, the AMF MUST NOT release the signaling connection immediately after the registration procedure is completed.

23a) In the case of registration through 3GPP access, if the AMF does not release the signaling connection, the AMF sends RRC deactivation support information to the NG-RAN.

In the case of registration through non-3GPP access, if the UE is in the CM-CONNECTED state even in 3GPP access, the AMF transmits RRC deactivation support information to the NG-RAN.

23) In 14b, if the Access and Mobility Subscription data provided by the UDM to the AMF includes steering of roaming information along with an indication that the UDM requests approval for receiving this information from the UE AMF may provide UE grant to UDM.

The AMF may also use the Nudm_SDM_Info service action to inform the UDM that the UE has received a Network Slicing Subscription Change Indication (see steps 21 and 22) and has taken action accordingly.

24) AMF to UDM After step 14a and in parallel with the previous step, AMF may use Nudm_UECM_Update to send an indication of "homogeneous support of IMS voice over PS session".

### <Problems to be solved by the disclosure of the present specification>

In the registration procedure shown in FIG. 5, only when the UE Policy Container is included in the registration request message transmitted by the UE, the AM policy association establishment procedure could be performed. At this time, a problem occurs if the UE does not include the UE policy container in the registration request message transmitted by the UE.

In order to solve this problem, there is a technology that modifies the local policy of AMF and allows the procedure to be performed interactively with the PCF. However, this technique may cause the following problems.

First, since many AMFs may exist in the network, there is a problem that the configuration of all AMFs must be modified when the operator policy is changed.

In addition, if the home operator's policy is to be applied to the UE accessing the visited network in the roaming situation, there is a difficulty in changing the AMF configuration of the other network.

### <Disclosure of the present specification>

There may be problems with flexibility/efficiency in applying/changing the operator's policy. A method to configure and control the operator's policy in the PCF, which is the subject that traditionally controls and manages the policy is proposed.

### I. First disclosure

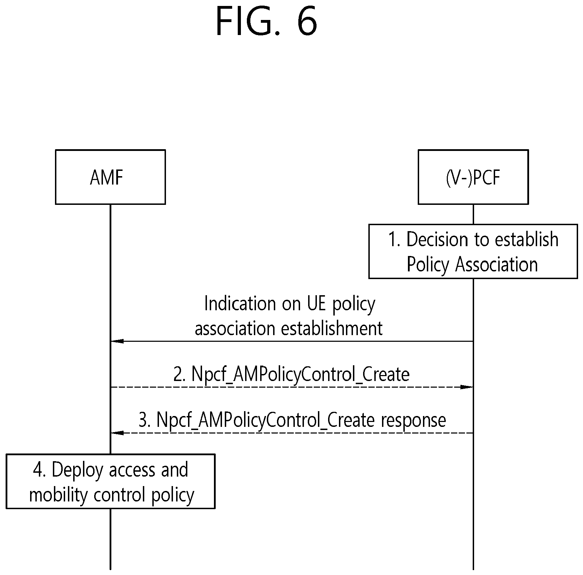

**FIG. 6** **shows a first example AM Policy Association Establishment procedure according to the first disclosure of the present specification.**

This procedure may be applied to both roaming and non-roaming scenarios.

In the case of non-roaming, the role of the V-PCF may be performed by the PCF. For roaming scenarios, the V-PCF may interact with AMF.
1) The PCF may decide to establish an AM Policy Association with the AMF according to the local policy, and then perform the steps described below.
2) After the PCF determines in step 1, The PCF may include Indication on UE policy association establishment based on UE subscription and operator policy and transmit the UE policy association establishment to AMF
3) AMF sends Npcf_AMPolicyControl_Create to (V-)PCF to establish an AM policy control connection with (V-)PCF. If the AMF has not yet obtained the access and mobility policy for the UE or the access and mobility policy of the AMF is no longer valid, the AMF requests the PCF to apply the operator policy for the UE in the PCF by including a request message in Npcf_AMPolicyControl_Create. the request message includes following information: SUPI, internal group, subscription notification indication and service area restrictions if available, RFSP index, allowed NSSAI, GPSI which are retrieved from the UDM during the update location procedure, and may include Access Type and RAT, PEI, ULI, UE time zone, and Serving Network.
4) (V)-PCF may transmit an Npcf_AMPolicyControl_Create response message to the AMF. (V)-PCF may include access and mobility related policy information in the response message. The access and mobility-related policy information may include service area restrictions, a list of allowed Tracking Area Identity (TAI), a maximum number of allowed TAIs, and an RFSP index and so on. The list of allowed TAIs is local TAIs in which the UE is to be registered.

In addition, (V)-PCF may provide Policy Control Request Trigger of the AM Policy Association to the AMF

The AMF is implicitly subscribed in the (V-)PCF to be notified of changes in the policies.

5) AMF may deploy access and mobility related policy information which includes storing the Service Area Restrictions and Policy Control Request Trigger of AM Policy Association, provisioning Service Area Restrictions to the UE and provisioning the RFSP index and Service Area Restrictions to the NG-RAN.

The PCF performs the establishment decision for AM policy association and then flexibility and efficiency of UE policy association control/management may be provided.

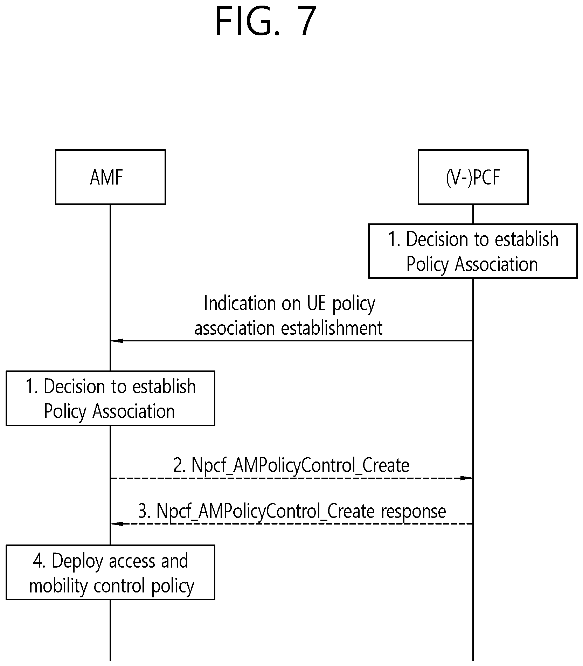

**FIG. 7** **shows a second example AM Policy Association Establishment procedure according to the first disclosure of the present specification.**

This procedure can be applied to both roaming and non-roaming scenarios.

In the case of non-roaming, the role of the V-PCF may be performed by the PCF. For roaming scenarios, V-PCF can interact with AMF.
1) The PCF may decide to establish an AM Policy Association with the AMF according to the local policy, and then perform the steps described below.
2) After the PCF determines in step 1, The PCF may include Indication on UE policy association establishment based on UE subscription and operator policy and transmit the UE policy association establishment to AMF
3) The AMF may decide to establish UE Policy Association with the (V-)PCF based on the local policy and the Indication on UE policy Association Establishment.
4) The AMF sends Npcf_AMPolicyControl_Create to the (V-)PCF to establish an AM policy control association with the (V-)PCF. If the AMF has not yet obtained Access and Mobility policy for the UE or if the Access and Mobility policy in the AMF are no longer valid, the AMF may include request message in Npcf_AMPolicyControl_Create and request the PCF to apply operator policies for the UE from the PCF. The request message may include following information: SUPI, Internal Group (see clause 5.9.7 of TS 23.501 [2]), subscription notification indication and, if available, Service Area Restrictions, RFSP index, the Allowed NSSAI, GPSI which are retrieved from the UDM during the update location procedure, and may include Access Type and RAT, PEI, ULI, UE time zone, and Serving Network.
5) (V)-PCF may transmit an Npcf_AMPolicyControl_Create response message to the AMF. (V)-PCF may include access and mobility related policy information in the response message. The access and mobility-related policy information includes service area restrictions, a list of allowed Tracking Area Identity (TAI), a maximum number of allowed TAIs, and an RFSP index, and so on. The list of allowed TAIs is local TAIs in which the UE is to be registered.

In addition, (V)-PCF may provide Policy Control Request Trigger of the AM Policy Association to the AMF

The AMF is implicitly subscribed in the (V-)PCF to be notified of changes in the policies.

6) AMF may deploy access and mobility related policy information which includes storing the Service Area Restrictions and Policy Control Request Trigger of AM Policy Association, provisioning Service Area Restrictions to the UE and provisioning the RFSP index and Service Area Restrictions to the NG-RAN.

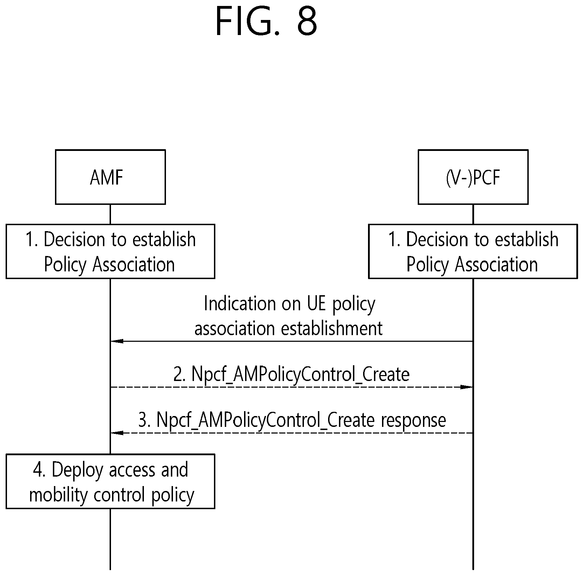

**FIG. 8** **shows a third example AM Policy Association Establishment procedure according to the first disclosure of the present specification.**

This procedure can be applied to both roaming and non-roaming scenarios.

In the case of non-roaming, the role of the V-PCF may be performed by the PCF. For roaming scenarios, V-PCF can interact with AMF.

The PCF may decide to establish an AM Policy Association with the AMF according to the local policy.

On the one hand, the AMF may decide to establish UE Policy Association with the (V-)PCF based on the local policy.

As a trigger of Policy Association Establishment, the PCF transmits the Indication on UE Policy Association Establishment to the AMF and Policy Association Establishment procedure may be performed.

The contents of the subsequent steps are the same as those described in FIGS. 6 and 7.

### II. Second disclosure

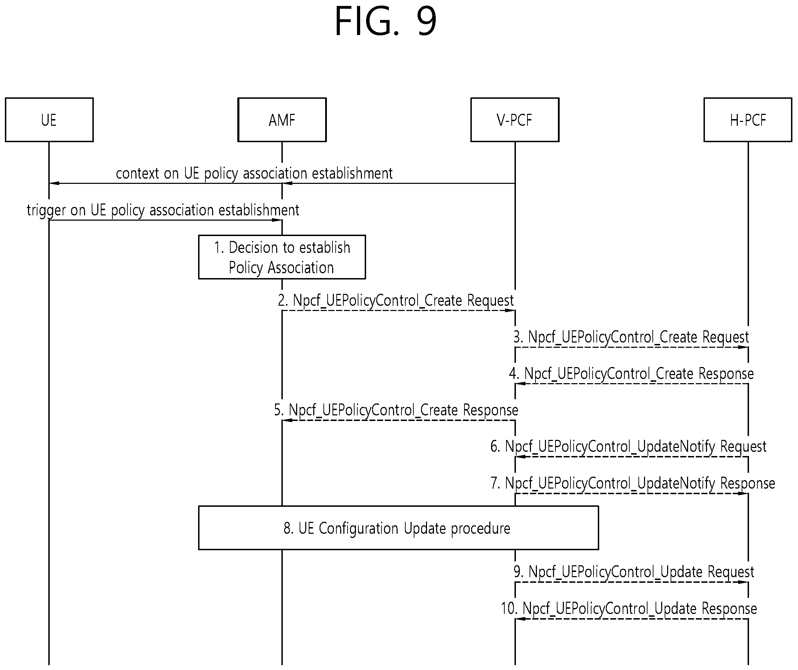

**FIG. 9** **shows an exemplary AM Policy Association Establishment procedure according to the second disclosure of the present specification.**

When i) UE initial registration with the network when a UE Policy Container is received, ii) The AMF relocation with PCF change in handover procedure and registration procedure or iii) UE registration with 5GS when the UE moves from EPS to 5GS and there is no existing UE Policy Association between AMF and PCF for this UE, a procedure to be described later may be performed.

This procedure may be applied to both roaming and non-roaming scenarios.

In the non-roaming case the V-PCF may be not involved and the role of the H-PCF may be performed by the PCF. For the roaming scenarios, the V-PCF may interact with the AMF and the H-PCF may interact with the V-PCF.

The V-PCF may transmit a context for UE policy association establishment to the UE and the AMF

When the UE determines that UE policy association establishment is necessary, the UE may transmit a trigger on UE policy association establishment to the AMF.
1) The AMF may decide to establish a UE policy association based on a trigger on UE policy association establishment.
2) AMF may transmit Npcf UEPolicyControl Create Request to V-PCF.
   Npcf UEPolicyControl Create Request may include SUPI, may include Access Type and RAT, PEI, ULI, UE time zone, Serving Network and UE Policy Container (the list of stored PSIs, operating system identifier, Indication of UE support for ANDSP). In roaming scenario, based on operator policies, the AMF may provide to the V-PCF the PCF ID of the selected H-PCF. The V-PCF may contact the H-PCF. In roaming case, steps 3 and 4 may be executed, otherwise step 5 may follow.
3) The V-PCF may forward the information received from AMF in step 2 to the H-PCF. When a UE Policy Container is received at initial registration, the H-PCF may store the PEI, the OSId or the indication of UE support for ANDSP in the UDR using Nudr_DM_Create including DataSet "Policy Data" and Data Subset "UE context policy control data".
4) The H-PCF may send a Npcf UEPolicyControl Create Response to the V-PCF. The H-PCF may provide the Policy Control Request Trigger parameters in the
   Npcf UEPolicyControl Create Response.
5) The (V-) PCF may send a Npcf UEPolicyControl Create Response to the AMF. The (V-)PCF may relay the Policy Control Request Trigger parameters in the Npcf UEPolicyControl Create Response.

The (V-)PCF may subscribe to notification of N1 message delivery of policy information to the UE.

6) H-PCF may transmit Npcf UEPolicyControl UpdateNotify Request to V-PCF.

The (H-)PCF may get policy subscription related information and the latest list of PSIs from the UDR. The (H-)PCF may get the PEI, the OSId. The (H-)PCF may request notifications from the UDR on changes in the subscription information. The (H-)PCF may create the UE policy container including UE access selection and PDU Session selection related policy information. The UE policy container may be included in the Npcf_UEPolicyControl UpdateNotify Request.

7) The V-PCF may send a response to H-PCF using Npcf UEPolicyControl UpdateNotify Response.

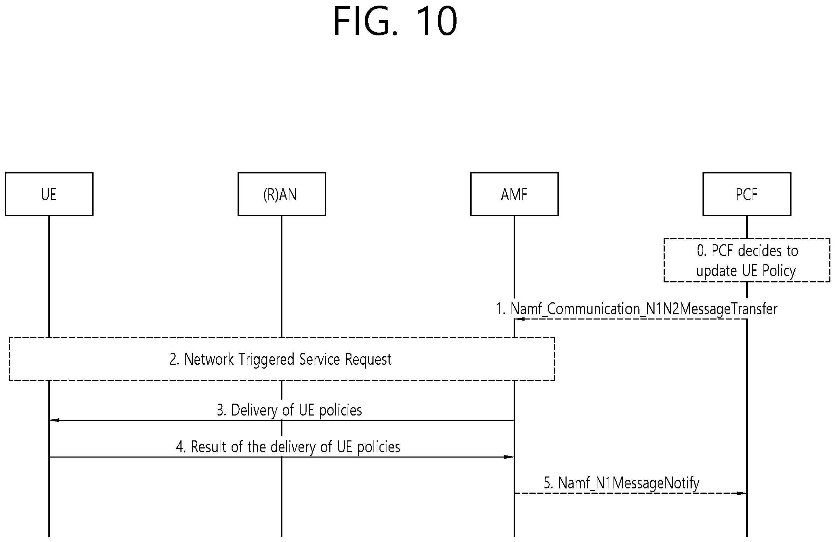

8) The (V-)PCF may trigger UE Configuration Update Procedure. The UE configuration update procedure will be described later with reference to FIG. 10.

9) V-PCF may transmit Npcf UEPolicyControl Update Request to H-PCF.

10) H-PCF may deliver Npcf UEPolicyControl Update Response to V-PCF.

**FIG. 10** **shows an exemplary UE Configuration Update procedure according to the second disclosure of the present specification.**

This procedure may be initiated when the PCF wants to update UE access selection and PDU Session selection related policy information (i.e. UE policy) in the UE configuration. In the non-roaming case the V-PCF may be not involved and the role of the H-PCF may be performed by the PCF. For the roaming scenarios, the V-PCF may interact with the AMF and the H-PCF interacts with the V-PCF.

PCF may decide to update UE policy procedures based on triggering conditions such as an initial registration, registration with 5GS when the UE moves from EPS to 5GS, or need for updating UE policy.

PCF may invoke Namf_Communication_N1N2MessageTransfer service operation provided by the AMF. The message may include SUPI, UE Policy Container.

If the UE is registered and reachable by AMF in either 3GPP access or non-3GPP access, AMF may transfer transparently the UE Policy container to the UE via the registered and reachable access.

If the UE is registered in both 3GPP and non-3GPP accesses and reachable on both access and served by the same AMF, the AMF may transfer transparently the UE Policy container to the UE via one of the accesses based on the AMF local policy.

If the UE is not reachable by AMF over both 3GPP access and non-3GPP access, the AMF may report to the PCF that the UE Policy container could not be delivered to the UE using Namf_Communication_N1N2TransferFailureNotification.

If AMF decides to transfer transparently the UE Policy container to the UE via 3GPP access, e.g. the UE is registered and reachable by AMF in 3GPP access only, or if the UE is registered and reachable by AMF in both 3GPP and non-3GPP accesses served by the same AMF and the AMF decides to transfer transparently the UE Policy container to the UE via 3GPP access based on local policy, and the UE is in CM-IDLE and reachable by AMF in 3GPP access.

If the UE is in CM-CONNECTED over 3GPP access or non-3GPP access, the AMF may transfer transparently the UE Policy container (UE access selection and PDU Session selection related policy information) received from the PCF to the UE. The UE Policy container may include the list of Policy Sections.

The UE may update the UE policy provided by the PCF and sends the result to the AMF.

If the AMF received the UE Policy container and the PCF subscribed to be notified of the reception of the UE Policy container then the AMF may forward the response of the UE to the PCF using Namf_N1MessageNotify.

The PCF may maintain the latest list of PSIs delivered to the UE and updates the latest list of PSIs in the UDR by invoking Nudr DM Update (SUPI, Policy Data, Policy Set Entry, updated PSI data) service operation.

### III. Third disclosure

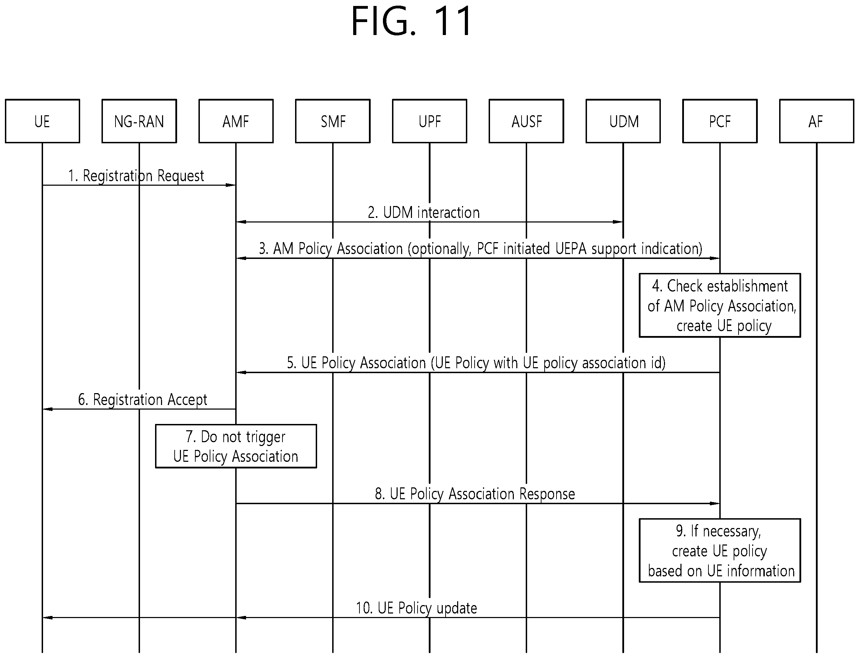

**FIG. 11** **shows an AM Policy Association Establishment procedure for an example according to the third disclosure of the present specification.**
1) The UE may send a registration request message to the AMF. Even if the UE policy container is not included in the registration request message, the steps described below may be performed.
2) AMF may obtain subscriber information (and so on) through interaction with UDM.
3) The AMF may form an AM Policy Association with the PCF to obtain policies necessary for access and mobility control (and so on).

In this step, additionally, between the AMF and the PCF, there may be a function support for the use of the PCF-initiated UE Policy Association function and a negotiation process for use of the function.

4) The PCF may check creation of the AM policy association. This step may mean that the PCF to provide the UE policy to the UE is selected. The PCF may create a UE policy to be provided to the UE. If there is not enough information to create a UE policy, a dummy UE policy may be created.

Alternatively, a UE policy may be generated by acquiring necessary information through information exchange with a third network node such as UDM. The generated UE policy may be used for the purpose for creating an AMF and UE policy association.

5) The PCF may attempt to create a UE Policy Association with the AMF. A UE policy association ID may be transmitted to the AMF together with the UE policy generated in step 4 above.

6) When the network registration process is finished, the AMF may send a registration accept message to the UE.

7) AMF may check whether the AMF is in UE Policy Association with the PCF. Based on the result, UE policy association may not be triggered.

8) AMF may transmit a UE policy association response message to the PCF. In this case, the AMF may provide the PCF with information necessary for generating a UE policy.

9) The PCF may create a UE policy to perform a UE policy update procedure if the dummy UE policy is created or if necessary.

10) The updated UE policy may be provided to the UE via AMF

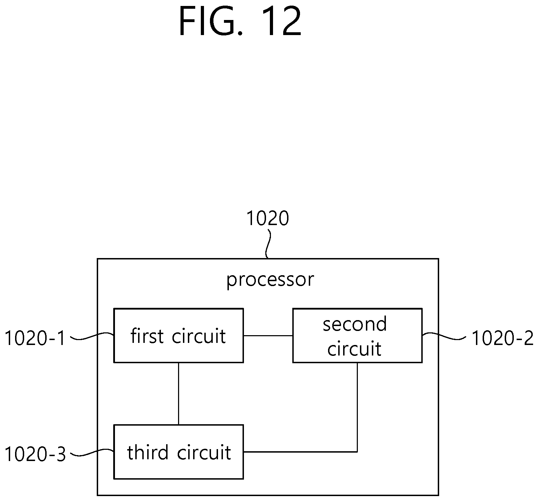

**FIG. 12** **shows a block diagram of a processor in which the disclosure of the present specification is implemented.**

As can be seen with reference to FIG. 12, in order that the proposed functions, procedures and/or methods described in the disclosure of this specification is implemented, a processor (1020) may include a plurality of circuitry. For example, the processor (1020) may include a first circuit (1020-1), a second circuit (1020-2), and a third circuit (1020-3). Also, although not shown, the processor (1020) may include more circuits. Each circuit may include a plurality of transistors.

The processor 1020 may be referred to as an application-specific integrated circuit (ASIC) or an application processor (AP), and may include at least one of a digital signal processor (DSP), a central processing unit (CPU), and a graphics processing unit (GPU).

The processor may be mounted in the UE.

The first circuit 1020-1 of the processor mounted in the UE may transmit a PDU (Protocol Data Unit) session related message including a first indication related to communication through the PC5 link to a Session Management Function (SMF) device.

The second circuit 1020 - 2 of the processor mounted in the UE may receive a response message from the SMF device.

The response message includes: a first QoS (Quality of Service) rule to be used on the Uu link, a second QoS rule to use on the PC5 link, and a path selection rule for whether data should be transmitted through the Uu link or the PC5 link.

The PDU session management message may be a PDU session establishment request message or a PDU session modification request message. The response message may be a PDU session establishment acceptance message or a PDU session modification command.

The third circuit 1020 - 3 of the processor mounted on the UE may set up a PC5 link with the counterpart UE.

A fourth circuit (not shown) of the processor mounted in the UE may receive the measurement configuration for the PC5 link from the base station.

A fifth circuit (not shown) of a processor mounted on the UE may perform measurement on the PC5 link based on the measurement configuration and transmit a measurement report to the base station.

A sixth circuit (not shown) of a processor mounted in the UE may receive an RRC signal for path switching to the Uu link from the base station.

A seventh circuit (not shown) of a processor mounted on the UE may perform a procedure of setting up a data radio bearer (DRB) through a Uu link based on the RRC signaling.

In order to set up the PC5 link with the counterpart UE, the third circuit 1020 - 3 of the processor mounted on the UE is an indication indicating that PC5 link setup is possible based on the proximity of the counterpart UE. A first RRC (Radio Resource Control) message including a may be transmitted to the base station. In addition, the third circuit 1020 - 3 of the processor mounted in the UE may receive a second RRC message including an indication indicating path switching from the base station. In addition, the third circuit 1020 - 3 of the processor installed in the UE may set up a PC5 link with the counterpart UE based on the indication indicating the path switching.

The second message may further include information on the timer.

Until the timer based on the information expires, both the PC5 link and the Uu link may be available.

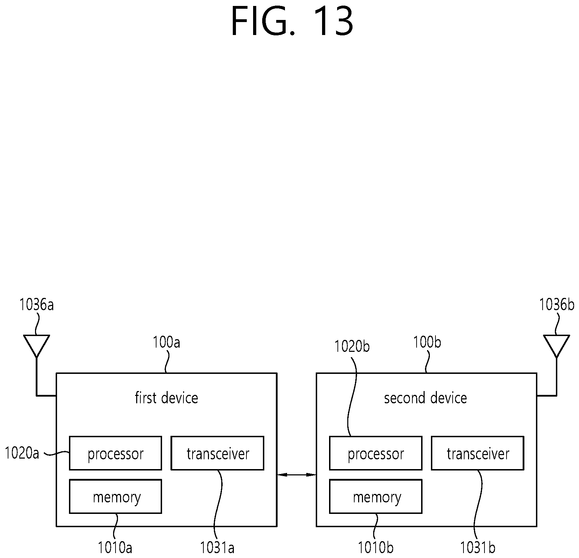

**FIG. 13** **shows an apparatus according to an embodiment.**

Referring to FIG. 13, a wireless communication system may include a first device (100a) and a second device (100b).

The first device (100a) may be the UE described in the disclosure of this specification. Alternatively, the first device (100a) may be a base station, a network node, a transmitting terminal, a receiving terminal, a wireless device, a wireless communication device, a vehicle, a vehicle equipped with an autonomous driving function, a connected car, a drone (Unmanned Aerial Vehicle, UAV), Artificial Intelligence (AI) Module, Robot, AR (Augmented Reality) Device, VR (Virtual Reality) Device, MR (Mixed Reality) Device, Hologram Device, Public Safety Device, MTC Device, IoT Device, Medical Device, Fin tech device (or financial device), a security device, a climate/environment device, a device related to 5G services, or other devices related to the 4th industrial revolution field.

The second device (100b) may be a network node (e.g., AMF or MME) described in the disclosure of this specification. Alternatively, the second device (100b) is a base station, a network node, a transmitting terminal, a receiving terminal, a wireless device, a wireless communication device, a vehicle, a vehicle equipped with an autonomous driving function, a connected car, a drone (Unmanned Aerial Vehicle, UAV), Artificial Intelligence (AI) Module, Robot, AR (Augmented Reality) Device, VR (Virtual Reality) Device, MR (Mixed Reality) Device, Hologram Device, Public Safety Device, MTC Device, IoT Device, Medical Device, Fin tech device (or financial device), a security device, a climate/environment device, a device related to 5G services, or other devices related to the 4th industrial revolution field.

For example, the UE 100 includes a mobile phone, a smart phone, a laptop computer, a UE device for digital broadcasting, personal digital assistants (PDA), a portable multimedia player (PMP), a navigation system, and a slate PC (slate). PC), tablet PC, ultrabook, wearable device (e.g., watch-type UE device (smartwatch), glass-type UE device (smart glass), HMD (head mounted display)) and the like. For example, the HMD may be a display device worn on the head. For example, an HMD may be used to implement VR, AR or MR.

For example, the drone may be a flying vehicle that does not have a human and flies by a wireless control signal. For example, the VR device may include a device that implements an object or a background of a virtual world. For example, the AR device may include a device implemented by connecting an object or background of the virtual world to an object or background of the real world. For example, the MR device may include a device that implements a virtual world object or background by fusion with a real world object or background. For example, the hologram device may include a device for realizing a 360-degree stereoscopic image by recording and reproducing stereoscopic information by utilizing an interference phenomenon of light generated by the meeting of two laser beams called holography. For example, the public safety device may include an image relay device or an image device that can be worn on a user's body. For example, the MTC device and the IoT device may be devices that do not require direct human intervention or manipulation. For example, the MTC device and the IoT device may include a smart meter, a bending machine, a thermometer, a smart light bulb, a door lock, or various sensors. For example, a medical device may be a device used for the purpose of diagnosing, treating, alleviating, treating, or preventing a disease. For example, a medical device may be a device used for the purpose of diagnosing, treating, alleviating or correcting an injury or disorder. For example, a medical device may be a device used for the purpose of examining, replacing, or modifying structure or function. For example, the medical device may be a device used for the purpose of controlling pregnancy. For example, the medical device may include a medical device, a surgical device, an (ex vivo) diagnostic device, a hearing aid, or a device for a procedure. For example, the security device may be a device installed to prevent a risk that may occur and maintain safety. For example, the security device may be a camera, CCTV, recorder or black box. For example, the fintech device may be a device capable of providing financial services such as mobile payment. For example, the fintech device may include a payment device or a Point of Sales (POS). For example, the climate/environment device may include a device for monitoring or predicting the climate/environment.

The first device (100a) includes at least one processor, such as a processor (1020a), and at least one memory, such as a memory (1010a), it may include at least one transceiver, such as transceiver (1031a). The processor (1020a) may perform the functions, procedures, and/or methods described above. The processor (1020a) may perform one or more protocols. For example, the processor (1020a) may perform one or more layers of an air interface protocol. The memory (1010a) is connected to the processor (1020a) and may store various types of information and/or commands. The transceiver (1031a) may be connected to the processor (1020a) and may be controlled to transmit/receive a wireless signal.

The second device (100b) may include at least one processor such as a processor (1020b), at least one memory device such as a memory (1010b), and at least one transceiver such as a transceiver (1031b). The processor (1020b) may perform the functions, procedures, and/or methods described above. The processor (1020b) may implement one or more protocols. For example, the processor (1020b) may implement one or more layers of an air interface protocol. The memory (1010b) is connected to the processor (1020b) and may store various types of information and/or commands. The transceiver (1031b) may be connected to the processor (1020b) and may be controlled to transmit/receive a wireless signal.

The memory (1010a) and/or the memory (1010b) may be respectively connected inside or outside the processor (1020a) and/or the processor (1020b), and may be connected to other processors through various technologies such as wired or wireless connection.

The first device (100a) and/or the second device (100b) may have one or more antennas. For example, antenna (1036a) and/or antenna (1036b) may be configured to transmit and receive wireless signals.

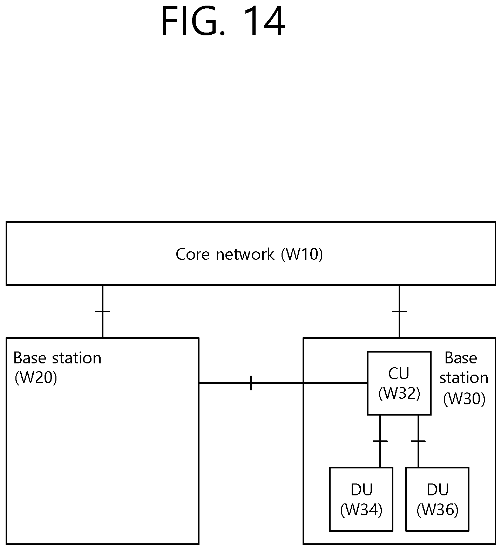

**FIG. 14** **illustrates a block diagram of a network node according to an embodiment.**

In particular, FIG. 14 is a diagram illustrating in detail a case in which a base station is divided into a central unit (CU) and a distributed unit (DU).

Referring to FIG. 14, base stations W20 and W30 may be connected to the core network W10, and the base station W30 may be connected to a neighboring base station W20. For example, the interface between the base stations W20 and W30 and the core network W10 may be referred to as NG, and the interface between the base station W30 and the neighboring base station W20 may be referred to as Xn.

The base station W30 may be divided into CUs W32 and DUs W34 and W36. That is, the base station W30 may be hierarchically separated and operated. The CU W32 may be connected to one or more DUs W34 and W36, for example, an interface between the CU W32 and the DUs W34 and W36 may be referred to as F1. The CU (W32) may perform functions of upper layers of the base station, and the DUs (W34, W36) may perform functions of lower layers of the base station. For example, the CU W32 is a radio resource control (RRC), service data adaptation protocol (SDAP), and packet data convergence protocol (PDCP) layer of a base station (e.g., gNB) hosting a logical node, and the DUs W34 and W36 may be logical nodes hosting radio link control (RLC), media access control (MAC), and physical (PHY) layers of the base station. Alternatively, the CU W32 may be a logical node hosting the RRC and PDCP layers of the base station (e.g., en-gNB).

The operation of the DUs W34 and W36 may be partially controlled by the CU W32. One DU (W34, W36) may support one or more cells. One cell can be supported by only one DU (W34, W36). One DU (W34, W36) may be connected to one CU (W32), and by appropriate implementation, one DU (W34, W36) may be connected to a plurality of CUs.

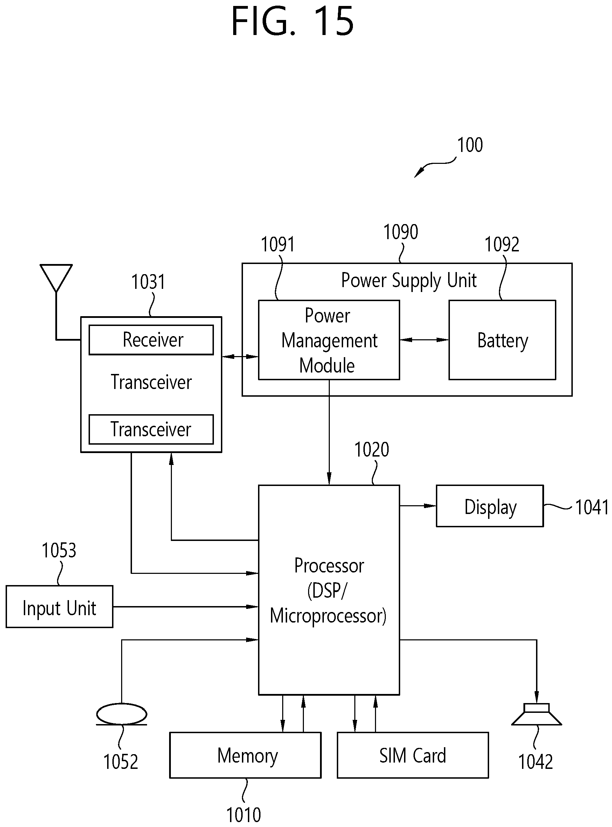

**FIG. 15** is a **block diagram illustrating the configuration of the UE 100 according to an embodiment.**

In particular, the UE 100 illustrated in FIG. 15 is a diagram illustrating the first apparatus of FIG. 13 in more detail.

The UE 100 includes a memory 1010, a processor 1020, a transceiver 1031, a power management module 1091, a battery 1092, a display 1041, an input unit 1053, a speaker 1042, and a microphone (1052), a subscriber identification module (SIM) card, and one or more antennas.

The processor (1020) may be configured to implement the proposed functions, procedures and/or methods described herein. The layers of the air interface protocol may be implemented in the processor (1020). The processor (1020) may include an application-specific integrated circuit (ASIC), other chipsets, logic circuits, and/or data processing devices. The processor (1020) may be an AP (application processor). The processor (1020) may include at least one of a DSP (digital signal processor), a CPU (central processing unit), a GPU (graphics processing unit), and a modem (modulator and demodulator). Examples of processor (1020) include SNAPDRAGONTM series processors manufactured by Qualcomm^{®}, EXYNOSTM series processors manufactured by Samsung^{®}, A series processors manufactured by Apple^{®}, HELIOTM series processors manufactured by MediaTek^{®}, ATOMTM series processor manufactured by INTEL^{®} or a corresponding next-generation processor.

The power management module (1091) manages power for the processor (1020) and/or the transceiver (1031). The battery (1092) supplies power to the power management module (1091). The display (1041) outputs the result processed by the processor (1020). Input (1053) receives input to be used by processor (1020). The input unit (1053) may be displayed on the display (1041). A SIM card is an integrated circuit used to securely store an IMSI (international mobile subscriber identity) and associated keys used to identify and authenticate subscribers in mobile phone devices such as mobile phones and computers. Many SIM cards can also store contact information.

The memory (1010) is operatively coupled to the processor (1020), and stores various information for operating the processor (610). Memory (1010) may include ROM (read-only memory), RAM (random access memory), flash memory, memory cards, storage media, and/or other storage devices. When the embodiment is implemented in software, the techniques described in this specification may be implemented in modules (eg, procedures, functions, etc.) that perform the functions described in this specification. Modules may be stored in memory (1010) and executed by processor (1020). The memory (1010) may be implemented inside the processor (1020). Alternatively, the memory (1010) may be implemented outside the processor (1020), and may be communicatively connected to the processor (1020) through various means known in the art.

The transceiver (1031) is operatively coupled to the processor (1020) and transmits and/or receives a radio signal. The transceiver (1031) includes a transmitter and a receiver. The transceiver (1031) may include a baseband circuit for processing a radio frequency signal. The transceiver controls one or more antennas to transmit and/or receive radio signals. The processor (1020) transmits command information to the transceiver (1031) to transmit, for example, a radio signal constituting voice communication data to initiate communication. The antenna functions to transmit and receive radio signals. When receiving a wireless signal, the transceiver (1031) may transmit the signal for processing by the processor (1020) and convert the signal to a baseband. The processed signal may be converted into audible or readable information output through the speaker (1042).

The speaker (1042) outputs sound related results processed by the processor (1020). Microphone (1052) receives sound related input to be used by processor (1020).

The user inputs command information such as a phone number by, for example, pressing (or touching) a button of the input unit (1053) or voice activation using the microphone (1052). The processor (1020) receives such command information and processes it to perform an appropriate function, such as making a call to a phone number. Operational data may be extracted from the SIM card or the memory (1010). In addition, the processor (1020) may display command information or display information on the display (1041) for the user to recognize and for convenience.

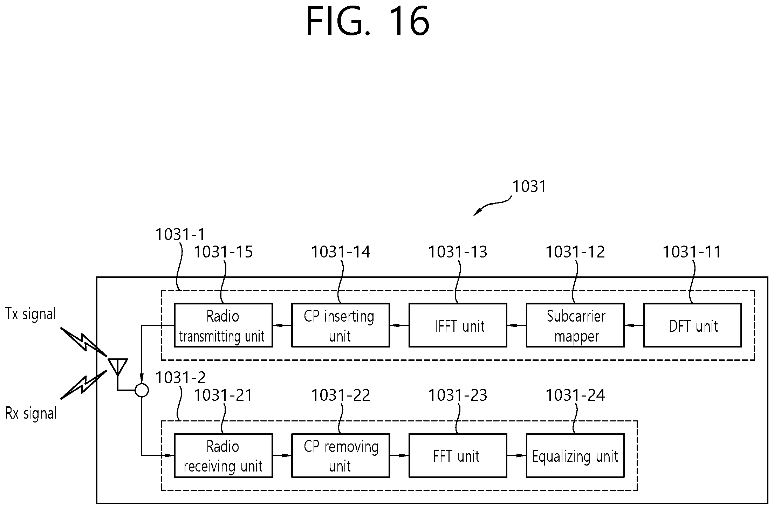

**FIG. 16** **is a detailed block diagram illustrating the transceiver of the first device shown in** **FIG. 13** **or the transceiver of the device shown in** **FIG. 15** **in detail.**

Referring to FIG. 16, the transceiver (1031) includes a transmitter (1031-1) and a receiver (1031-2). The transmitter (1031-1) includes a Discrete Fourier Transform (DFT) unit (1031-11), a subcarrier mapper (1031-12), an IFFT unit (1031-13) and a CP insertion unit (1031-14), and a wireless transmitter (1031-15). The transmitter (1031-1) may further include a modulator. In addition, for example, a scramble unit (not shown; scramble unit), a modulation mapper (not shown; modulation mapper), a layer mapper (not shown; layer mapper) and a layer permutator (not shown; layer permutator) may be further included, this may be disposed before the DFT unit (1031-11). That is, in order to prevent an increase in PAPR (peak-to-average power ratio), the transmitter (1031-1) passes information through the DFT (1031-11) before mapping a signal to a subcarrier. After subcarrier mapping is performed on the signal spread (or precoded in the same sense) by the DFT unit (1031-11) through the subcarrier mapper (1031-12), an IFFT (Inverse Fast Fourier Transform) unit (1031- 13) to make it a signal on the time axis.

The DFT unit (1031-11) outputs complex-valued symbols by performing DFT on input symbols. For example, when Ntx symbols are input (however, Ntx is a natural number), the DFT size is Ntx. The DFT unit (1031-11) may be called a transform precoder. The subcarrier mapper (1031-12) maps the complex symbols to each subcarrier in the frequency domain. The complex symbols may be mapped to resource elements corresponding to resource blocks allocated for data transmission. The subcarrier mapper (1031-12) may be referred to as a resource element mapper. The IFFT unit (1031-13) outputs a baseband signal for data that is a time domain signal by performing IFFT on an input symbol. The CP insertion unit (1031-14) copies a part of the rear part of the base band signal for data and inserts it into the front part of the base band signal for data. ISI (Inter-symbol interference) and ICI (Inter-Carrier Interference) are prevented through CP insertion, so that orthogonality can be maintained even in a multi-path channel.

On the other hand, the receiver (1031-2) includes a radio receiver (1031-21), a CP remover (1031-22), an FFT unit (1031-23), and an equalizer (1031-24). The radio receiving unit (1031-21), the CP removing unit (1031-22), and the FFT unit (1031-23) of the receiver (1031-2) include the radio transmitting unit (1031-15) in the transmitting end (1031-1), it performs the reverse function of the CP insertion unit (1031-14) and the IFF unit (1031-13). The receiver (1031-2) may further include a demodulator.

### <Scenarios to which the disclosure of the present specification can be applied>

Although not limited thereto, the various descriptions, functions, procedures, suggestions, methods, and/or flow charts of the disclosure of the present specification disclosed may be applied in various fields requiring wireless communication/connection (e.g., 5G) between devices.

Hereinafter, it will be exemplified in more detail with reference to the drawings. In the following drawings/descriptions, the same reference numerals may represent the same or corresponding hardware blocks, software blocks, or functional blocks, unless otherwise indicated.

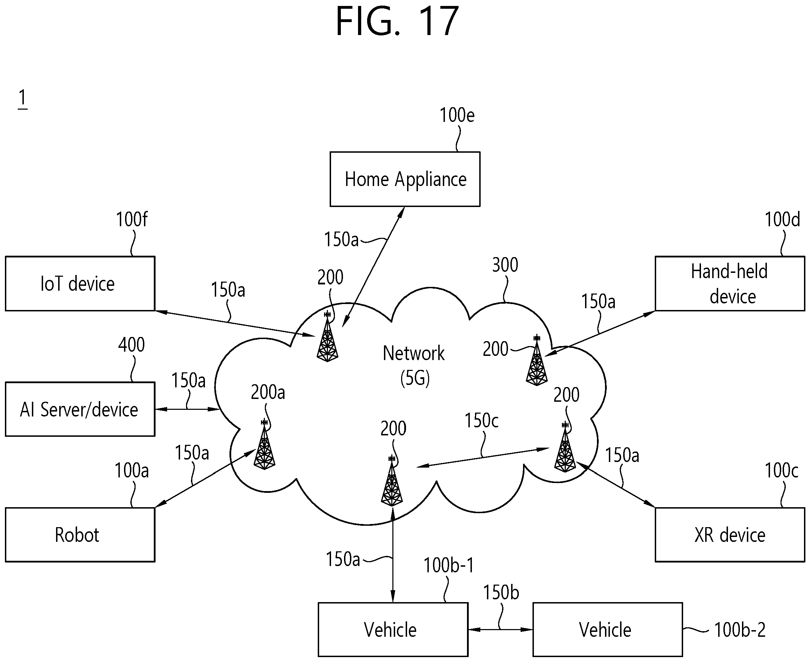

**FIG. 17** **illustrates a communication system 1 applied to the disclosure of the present specification.**

Referring to FIG. 17, a communication system (1) applied to the disclosure of the present specification includes a wireless device, a base station, and a network. Here, the wireless device may mean a device that performs communication using a wireless access technology (e.g., 5G NR (New RAT), LTE (Long Term Evolution)), and may be referred to as a communication/wireless/5G device. Although not limited thereto, the wireless device may include a robot (100a), a vehicle (100b-1, 100b-2), an XR (eXtended Reality) device (100c), a hand-held device (100d, and a home appliance (100e), an IoT (Internet of Thing) device (100f), and an AI device/server (400). For example, the vehicle may include a vehicle equipped with a wireless communication function, an autonomous driving vehicle, a vehicle capable of performing inter-vehicle communication, and the like. Here, the vehicle may include an UAV (Unmanned Aerial Vehicle) (e.g., a drone). XR devices include AR (Augmented Reality)/VR (Virtual Reality)/MR (Mixed Reality) devices, and include a HMD(Head-Mounted Device), a HUD(Head-Up Display) provided in a vehicle, a television, a smartphone, It may be implemented in the form of a computer, a wearable device, a home appliance, a digital signage, a vehicle, a robot, and the like. The portable device may include a smart phone, a smart pad, a wearable device (e.g., a smart watch, smart glasses), a computer (e.g., a laptop computer), and the like. Home appliances may include a TV, a refrigerator, a washing machine, and the like. The IoT device may include a sensor, a smart meter, and the like. For example, the base station and the network may be implemented as a wireless device, and the specific wireless device (200a) may operate as a base station/network node to other wireless devices.

The wireless devices (100a-100f) may be connected to the network (300) through the base station (200). AI (Artificial Intelligence) technology may be applied to the wireless devices (100a - 100f), and the wireless devices (100a-100f) may be connected to the AI server (400) through the network (300). The network (300) may be configured using a 3G network, a 4G (e.g., LTE) network, or a 5G (e.g., NR) network. The wireless devices (100a-100f) may communicate with each other through the base station (200)/network (300), but may also communicate directly (e.g. sidelink communication) without passing through the base station/network. For example, the vehicles (100b-1,100b-2) may perform direct communication (e.g. Vehicle to Vehicle (V2V)/Vehicle to everything (V2X) communication). In addition, the IoT device (e.g., sensor) may directly communicate with other IoT devices (e.g., sensor) or other wireless devices (100a-100f).

Wireless communication/connection (150a, 150b, and 150c) may be performed between the wireless devices (100a-100f)/base station (200) and the base station (200)/base station (200). Here, the wireless communication/connection includes uplink/downlink communication (150a) and sidelink communication (150b) (or D2D communication), and communication between base stations (150c) (e.g. relay, IAB (Integrated Access Backhaul)). This can be done through technology (e.g. 5G NR) Wireless communication/connection (150a, 150b, 150c) allows the wireless device and the base station/radio device, and the base station and the base station to transmit/receive wireless signals to each other. For example, the wireless communication/connection (150a, 150b, and 150c) may transmit/receive a signal through various physical channels. To this end, based on various proposals of the present specification, At least some of various configuration information setting process for transmission/reception of a wireless signal (e.g., channel encoding/decoding, modulation/demodulation, resource mapping/demapping, etc.), resource allocation process and etc. may be performed.

In the above, preferred embodiments have been exemplarily described, but the disclosure of the present specification is not limited to such specific embodiments, and thus, modifications, changes, or can be improved.

In the exemplary system described above, although the methods are described on the basis of a flowchart as a series of steps or blocks, the methods are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for establishment of Policy Association, comprising:
determining to establish a policy association, by a PCF (Policy Control Function), based on a first information;
transmitting, by the PCF to an AMF (Access and Mobility Management Function), indication on policy association establishment;
receiving, by the PCF from the AMF, policy association establishment request message.

2. The method of claim 1,
wherein the indication on policy association establishment includes necessary information for establishing policy association.

3. The method of claim 1, further comprising:
transmitting, by the PCF to a UE (User Equipment), the indication on policy association establishment.

4. The method of claim 1,
wherein the first information includes at least one of operator policy and subscription of the UE.

5. The method of claim 1,
wherein the indication on policy association establishment is included in message related to policy association establishment and is transmitted.

6. The method of claim 1, further comprising:
transmitting, by the PCF to the AMF, policy association establishment response message.

7. A method for establishment of Policy Association, comprising:
receiving, by an AMF (Access and Mobility Management Function) from a PCF (Policy Control Function), indication on policy association establishment;
transmitting, by the AMF to the PCF, policy association establishment request message.

8. The method of claim 7, further comprising:
determining to establishing policy association, by the AMF.

9. The method of claim 7,
wherein the indication on policy association establishment includes necessary information for establishing policy association.

10. The method of claim 9, further comprising:
receiving, by the AMF from a UE (User Equipment), trigger on UE policy association establishment.

11. The method of claim 7, further comprising:
receiving, by the AMF from the UE, registration request message, wherein the registration request message does not include UE policy container.

12. The method of claim 11,
if the registration request message does not include UE policy container, the policy association establishment request message is transmitted based on the indication on policy association establishment.

13. The method of claim 10, further comprising:
determining to establishing policy association, by the AMF.

14. The method of claim 7,
wherein the indication on policy association establishment is included in message related to policy association establishment and is transmitted.

15. The method of claim 10, further comprising:
receiving, by the AMF from the PCF, policy association establishment response message.

16. A method for establishment of Policy Association, comprising:
receiving, by a UE (User Equipment) from a PCF(Policy Control Function), necessary information for establishing policy association;
determining that policy association establishment is necessary, by the UE;
transmitting, by the UE to an AMF (Access and Mobility Management Function), trigger on UE policy association establishment.
